Europäisches Patentamt

**European Patent Office**

Office européen des brevets

(19)

(11) Veröffentlichungsnummer: **0 013 881**
**B1**

(12) **EUROPÄISCHE PATENTSCHRIFT**

(45) Veröffentlichungstag der Patentschrift:
**12.08.81**

(51) Int. Cl.³: **B 29 D 27/04**, B 29 D 27/02

(21) Anmeldenummer: **80100028.2**

(22) Anmeldetag: **04.01.80**

(54) **Einrichtung zum diskontinuierlichen Herstellen von Blockschaumstoff.**

(30) Priorität: **13.01.79 DE 2901177**

(43) Veröffentlichungstag der Anmeldung:
**06.08.80 Patentblatt 80/16**

(45) Bekanntmachung des Hinweises auf die Patenterteilung:
**12.08.81 Patentblatt 81/32**

(84) Benannte Vertragsstaaten:
**CH DE FR GB IT**

(56) Entgegenhaltungen:
**US-A-2 649 620**

(73) Patentinhaber: **BAYER AG, Zentralbereich Patente, Marken und Lizenzen, D-5090 Leverkusen 1, Bayerwerk (DE)**

(72) Erfinder: **Reffelmann, Gerd, Ing.-grad., Untergründemich 13, D-5063 Overath (DE)**

Die Erfindung betrifft eine Einrichtung zum diskontinuierlichen Herstellen von Blockschaumstoff, wobei eine in einem brückenartigen Rahmengestell senkrecht verschiebbare, mit Komponentenzuleitungen versehene, einen Rührer aufweisende Mischvorrichtung angeordnet ist, die als Mischbehälter einen an der Kopfplatte angeordneten und auf den Boden eines darunter plazierbaren Formkastens aufsetzbaren bodenlosen Zylindermantel aufweist.

Derartige Einrichtungen werden verwendet, wenn die Herstellung geringer Mengen Blockschaumstoff erforderlich ist, für die sich eine kontinuierlich arbeitende Einrichtung nicht lohnt.

Bei diesen Einrichtungen wird der als Mischkammer dienende bodenlose Zylindermantel vor dem Einbringen der Reaktionskomponenten auf den Boden des Formkastens abgesenkt. Dabei ist es wichtig, daß zwischen dem unteren Rand des Zylindermantels und dem Boden des Formkastens während des Mischvorganges eine gute Dichtwirkung besteht, um das Entweichen unvermischter Komponententeile zu vermeiden.

Übliche elastische Abdichtungen eignen sich nicht, weil das ausreagierende Reaktionsgemisch anhaften bleibt und jedesmal ein erneutes Reinigen erfordern würde, damit der Rand überall dicht aufsitzt.

Es besteht also die Aufgabe, zwischen dem unteren Rand des Zylindermantels und dem Boden des Formkastens eine gute Abdichtung zu schaffen, die aufgrund ihrer Konstruktion weitgehend verunreinigungsfrei bleibt und auch keiner großen Wartung bedarf.

Diese Aufgabe wird dadurch gelöst, daß der Boden des Formkastens mit einer nachgiebigelastischen Schicht ausgelegt ist, über die die Kunststoffolie gespannt ist.

Aus der US-A-2 649 620 ist bereits eine ähnliche Vorrichtung bekannt, wobei ebenfalls eine Kunststoffolie zwischen dem Schaumstoff und dem Boden des Formkastens vorgesehen ist, allerdings in der Weise, daß die Folie zuerst sackartig innerhalb des Zylindermantels eingespannt ist, am Ende der Mischperiode aber freigegeben wird, so daß sich diese Folie nach dem Hochfahren der Mischvorrichtung mehr oder weniger faltenfrei auf dem Boden des Formkastens ausbreiten kann. Das Problem der Abdichtung des unteren Randes des Zylindermantels zur Zeit der Vermischung der zum Teil recht flüssigen Komponenten stellt sich hier also nicht in vergleichbarer Weise.

Die Dicke der nachgiebig-elastischen Schicht beträgt vorzugsweise 0,1 bis 5 cm. Insbesondere eignet sich eine Dicke von 0,3 bis 1 cm.

Die nachgiebig-elastische Schicht besteht nach einer besonderen Ausführungsform aus einer Weichschaumstoffmatte, weicher Filzmatte, dichtem Faservlies, Schaumgummimatte oder dergleichen.

Die Kunststoffolie besteht vorzugsweise aus Polyethylen, Polypropylen, Polyvinylchlorid. Ihre Dicke beträgt vorzugsweise 0,5 bis 2 mm, insbesondere 0,1 bis 1 mm.

Dadurch wird erreicht, daß beim Aufsetzen des bodenlosen Zylindermantels dessen unterer Rand in die nachgiebig-elastische Schicht einsinkt und auf diese Weise eine gute Abdichtung entsteht.

Ist der Mischvorgang beendet und wird die Mischvorrichtung mit dem bodenlosen Zylindermaterial wieder angehoben, so nimmt die nachgiebig-elastische Schicht ihre ursprüngliche Form wieder an und bildet eine ebene Unterlage, auf der sich das Reaktionsgemisch schnell nach allen Seiten ausbreitet und aufschäumt. Die Kunststoffolie besitzt nur geringe Haftfähigkeit, so daß sich der fertige Schaumstoff leicht löst und die Kunststoffolie wieder verwendbar ist.

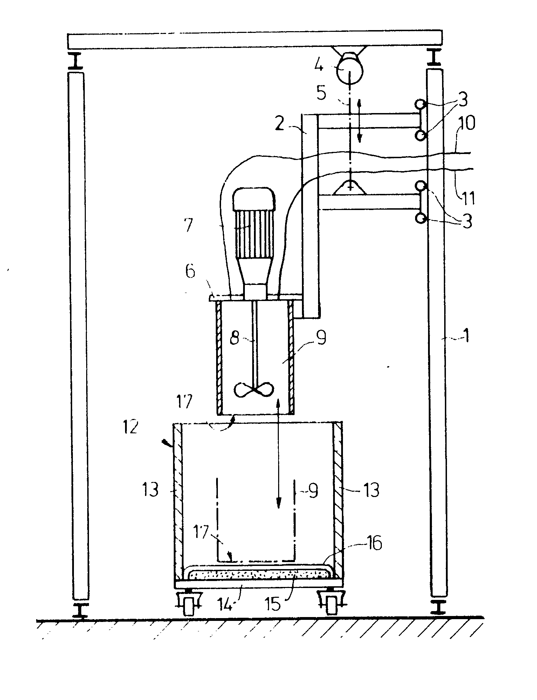

In der Zeichnung ist die Einrichtung an einem Ausführungsbeispiel rein schematisch dargestellt und nachstehend näher erläutert:

An einem brückenartigen Rahmengestell 1 ist eine auf- und abfahrbare Tragvorrichtung 2 mittels Rollen 3 geführt. Sie ist an einem mittels eines Motors 4 aufwickelbaren Seil 5 aufgehängt und trägt eine Kopfplatte 6, auf der ein Antriebsmotor 7 angeordnet ist, der einen Rührer 8 antreibt. Dieser ragt senkrecht in einen an der Kopfplatte 6 lösbar befestigten bodenlosen Zylindermantel 9, der als Mischbehälter dient, hinein. Mit 10 und 11 sind die Zuleitungen für die Komponenten Isocyanat und Polyol bezeichnet. Genau unter dem bodenlosen Zylindermantel 9 ist ein fahrbarer Formkasten 12 plaziert, dessen Innenflächen der klappbaren Seitenwände 13 gewachst sind, um ein Anhaften von Schaumstoff zu vermeiden. Der Boden 14 des Formkastens 12 ist mit einer Schaumstoffmatte 15 (nachgiebig-elastische Schicht) ausgelegt, über die eine Kunststoffolie 16 aus Polyethylen gespannt ist. Der bodenlose Zylindermantel 9 sitzt in der gestrichelten Darstellung mit seinem unteren Rand 17 abdichtend auf dieser Unterlage auf.

## Patentansprüche

1. Einrichtung zum diskontinuierlichen Herstellen von Blockschaumstoff, wobei eine in einem brückenartigen Rahmengestell (1) senkrecht verschiebbare, mit Komponentenzuleitungen (10, 11) versehene, einen Rührer (8) aufweisende Mischvorrichtung (6, 7, 8, 9) angeordnet ist, die als Mischbehälter (9) einen an einer Kopfplatte (6) angeordneten und auf den mit einer Kunststoffolie (16) belegten Boden (14) eines darunter plazierbaren Formkastens (12) aufsetzbaren bodenlosen Zylindermantel (9) aufweist, dadurch gekennzeichnet, daß der Boden (14) des

2

Formkastens (12) mit einer nachgiebig-elastischen Schicht (15) ausgelegt ist, über die die Kunststoffolie (16) gespannt ist.

2. Einrichtung nach Anspruch 1, dadurch gekennzeichnet, daß die nachgiebig-elastische Schicht (15) eine Dicke von 0,1 bis 5 cm aufweist.

3. Einrichtung nach den Ansprüchen 1 und 2, dadurch gekennzeichnet, daß die nachgiebig-elastische Schicht (15) aus einer Weichschaumstoffmatte, weicher Filzmatte, dichtem Faservlies, Schaumgummimatte besteht.

4. Einrichtung nach den Ansprüchen 1 bis 3, dadurch gekennzeichnet, daß die Kunststoffolie (16) aus Polyethylen, Polypropylen oder Polyvinylchlorid besteht.

5. Einrichtung nach den Ansprüchen 1 und 4, dadurch gekennzeichnet, daß die Kunststoffolie (16) eine Dicke von 0,1 bis 2 mm aufweist.

**Claims**

1. A device for the discontinuous production of block foam, in which is arranged a mixing apparatus (6, 7, 8, 9), provided with component feed pipes (10, 11) and a stirrer (8), which is vertically movable on a bridge-like frame work (1) and which has as mixing container (9) a bottomless cylindrical shell (9) which is arranged on a head plate (6) and which can be placed on the bottom (14), covered with a plastic film (16), of a moulding box (12) which can be placed beneath it, characterised in that the bottom (14) of the moulding box (12) ist fitted out with a flexible elastic layer (15), over which the plastic film (16) is stretched.

2. A device according to claim 1, characterised in that the flexible elastic layer (15) is from 0.1 to 5 cm thick.

3. A device according to claims 1 and 2, characterised in that the flexible elastic layer (15) comprises a flexible foam mat, a flexible felt mat, an impervious non-woven fabric, a foam rubber mat.

4. A device according to claims 1 to 3, characterised in that the plastic film (16) is composed of polyethylene, polypropylene or polyvinyl chloride.

5. A device according to claims 1 and 4, characterised in that the plastic film (16) is from 0.1 to 2 mm thick.

Revendications

1. Appareillage pour la préparation discontinue de mousse en blocs dans lequel un dispositif de mélange (6, 7, 8, 9) équipé d'un agitateur (8) et de conduits d'alimentation en les composants (10, 11), mobile dans le sens vertical, est disposé dans un châssis en forme de portique (1), le dispositif de mélange (9) comprenant, en tant que récipient de mélange (9), une chemise de cylindre sans fond (9) disposée sur une table supérieure (6) et qu'on peut poser sur un châssis de moule (12) qu'on peut mettre au-dessous et dont le fond (14) est recouvert d'une feuille de matière plastique (16), caractérisé en ce que le fond (14) du châssis de moule (12) est recouvert d'une couche élastique-déformable (15) sur laquelle on a tendu la feuille de matiére plastique (16).

2. Appareillage selon la revendication 1, caractérisé en ce que la couche élastique-déformable (15) présente une épaisseur de 0,1 à 5 cm.

3. Appareillage selon les revendications 1 et 2, caractérisé en ce que la couche élastique-déformable (15) consiste en une couche de mousse souple, une couche de feutre souple, une étoffe fibreuse non tissée dense, une couche de caoutchouc-mousse.

4. Appareillage selon les revendications 1 à 3, caractérisé en ce que la feuille de matière plastique (16) consiste en polyéthylène, polypropylène ou chlorure de polyvinyle.

5. Appareillage selon les revendications 1 et 4, caractérisé en ce que la feuille de matière plastique (16) présente une épaisseur de 0,1 à 2 mm.